# EUROPÄISCHE PATENTSCHRIFT

(11) **EP 3 441 650 B1**
(45) Veröffentlichungstag und Bekanntmachung des Hinweises auf die Patenterteilung: **20.01.2021**
(21) Anmeldenummer: 17185129.8
(22) Anmeldetag: 07.08.2017
(51) Int. Cl.: F16K 31/08, F16K 31/10, F16K 31/52, F16K 51/02, F16K 31/06

(54) **SICHERHEITSVENTIL**
SAFETY VALVE
SOUPAPE DE SÉCURITÉ

(43) Veröffentlichungstag der Anmeldung: 13.02.2019
(73) Patentinhaber: PFEIFFER VACUUM GMBH, 35614 Asslar (DE)
(72) Erfinder: Wagner, Jürgen, 57629 Müschenbach (DE); Bader, Florian, 35625 Hüttenberg (DE); Losch, Wolfgang, 35080 Bad Endbach (DE)
(74) Vertreter: Manitz Finsterwald Patent- und Rechtsanwaltspartnerschaft mbB

(56) Entgegenhaltungen:
- DE-A1- 4 232 831
- DE-A1- 4 438 250
- DE-A1- 10 317 474
- DE-A1- 19 716 377
- DE-C- 818 715
- GB-A- 979 662
- JP-U- S5 349 736
- US-A- 476 573
- US-A- 1 603 005
- US-A- 1 873 405
- US-B2- 8 308 129

## Beschreibung

Die vorliegende Erfindung betrifft ein steuerbares Ventil, insbesondere ein Hochvakuum-Sicherheitsventil, das ein Schließelement aufweist, welches in einer Bewegungsrichtung zwischen einer Schließstellung und einer Offenstellung bewegbar ist.

Steuerbare Ventile werden in vielen Bereichen der Technik eingesetzt. In Vakuumanlagen werden beispielsweise Hochvakuum-Sicherheitsventile verwendet, um einen Hochvakuumbereich, der beispielsweise einen Rezipienten und wenigstens eine Turbomolekularpumpe umfasst, gegenüber einem Vorvakuumbereich abzudichten, in welchem wenigstens eine Vorvakuumpumpe, wie beispielsweise eine Drehschieber-Vakuumpumpe, angeordnet ist, die gegen Atmosphärendruck ausstößt.

Durch eine solche Abdichtung des Hochvakuumbereichs gegenüber dem Vorvakuumbereich lässt sich zum einen eine unerwünschte Belüftung des Hochvakuumbereichs vermeiden. Zum anderen handelt es sich bei einer Vorvakuumpumpe häufig um eine ölgeschmierte Vakuumpumpe. Durch die Abdichtung des Hochvakuumbereichs gegenüber dem Vorvakuumbereich lässt sich daher bei Ausfall einer der Vakuumpumpen der Vakuumanlage eine Ölströmung von der ölgeschmierten Vorvakuumpumpe in den Hochvakuumbereich hinein verhindern.

Bisher werden Hochvakuum-Sicherheitsventile verwendet, die hydraulisch betätigt werden und mit einer Ölpumpe der Vorvakuumpumpe gekoppelt sind. Ein von der Ölpumpe aufgebauter Hydraulikdruck hält das Hochvakuum-Sicherheitsventil während des Betriebs der Vorvakuumpumpe geöffnet. Bei Ausfall der Vorvakuumpumpe wird die Ölpumpe nicht weiter angetrieben. Dadurch fällt der Hydraulikdruck ab, und es entsteht ein Differenzdruck zwischen dem Hochvakuum-Sicherheitsventil und einer mit der Ölpumpe verbundenen Hydraulikleitung, welcher das Hochvakuum-Sicherheitsventil schließt.

Wenn die Vorvakuumpumpe bei geringen Drehzahlen betrieben wird, ist der Differenzdruck im Hochvakuum-Sicherheitsventil möglicherweise zu gering, um das Ventil zu schließen. Wenn ferner der Gasdruck in dem Bereich der Vakuumanlage, in welchem sich das Hochvakuum-Sicherheitsventil befindet, bereits in einem Bereich von etwa 750 bis 1000 mbar (75000 bis 100000 Pa) iegt, d.h. nahezu im Bereich des Atmosphärendrucks, besteht außerdem die Gefahr, dass das Hochvakuum-Sicherheitsventil bei einem Ausfall der Vorvakuumpumpe nicht schließt, da die Druckdifferenz zwischen der Hydraulikleitung und einem Innenraum des Hochvakuum-Sicherheitsventils zu gering ist, welcher die Vorvakuumpumpe und den Hochvakuumbereich verbindet. Da ein manuelles Schließen des Hochvakuum-Sicherheitsventils meistens unerwünscht ist, ist in der Regel keine Ansteuerung des Ventils unabhängig von der Ölpumpe der Vorvakuumpumpe vorgesehen.

Aus der DE 42 32 831 A1 ist ein steuerbares Ventil mit den Merkmalen gemäß dem Oberbegriff des Anspruchs 1 bekannt.

Eine Aufgabe der Erfindung besteht darin, ein steuerbares Ventil zu schaffen, das ein zuverlässiges Schließverhalten unter allen erforderlichen Betriebsbedingungen aufweist und zusätzlich manuell steuerbar ist.

Diese Aufgabe wird gelöst durch ein steuerbares Ventil mit den Merkmalen des Anspruchs 1.

Mittels der magnetischen Einrichtung ist das Ventil somit jederzeit ansteuerbar, und es kann entweder auf Anweisung eines Bedieners oder automatisch mittels eines Steuersignals geschlossen werden, das beispielsweise in Reaktion auf ein bestimmtes Ereignis innerhalb einer Vakuumanlage erzeugt wird, z.B. bei Ausfall einer bestimmten Komponente der Vakuumanlage. Wenn das Ventil als Hochvakuum-Sicherheitsventil eingesetzt wird, ist somit ein schnelles Schließen des Ventils zum Verhindern einer Ölströmung aus einem Vorvakuumbereich in einen Hochvakuumbereich möglich.

Aufgrund der Übersetzungseinrichtung unterscheidet sich die Distanz, über welche das Schließelement zwischen der Schließstellung und der Offenstellung bewegbar ist, von der Distanz zwischen der Ruhelage und der Aktivlage des Aktuators. Die Distanz zwischen Schließstellung und Offenstellung des Schließelements kann zunächst entsprechend den Anforderungen an eine Leitung oder Verbindung festgelegt werden, die mittels des Ventils verschließbar sein soll. Anschließend kann die Übersetzung der Übersetzungseinrichtung entsprechend einer möglichen bzw. gewünschten Distanz zwischen Ruhelage und Aktivlage des Aktuators eingestellt werden. Somit stehen mit der Übersetzung und der Distanz zwischen Ruhelage und Aktivlage des Aktuators zwei Parameter zur Verfügung, die eingestellt werden können, um die erforderliche Distanz zwischen Schließstellung und Offenstellung des Schließelements zu erreichen.

Da das Schließelement seine Schließstellung einnimmt, wenn sich der Aktuator in der Ruhelage befindet, d.h. nicht betätigt wird, ist das Ventil stets bestrebt, einen geschlossenen Zustand einzunehmen. Dadurch wird verhindert, dass das Ventil unbeabsichtigt offenbleibt, wenn tatsächlich ein Schließen des Ventils vorgesehen ist.

Ferner umfasst die magnetische Einrichtung erfindungsgemäß einen ersten und einen zweiten Aktuator, die einander gegenüberliegend angeordnet und in entgegengesetzte Richtungen bewegbar sind. Die Übersetzungseinrichtung umfasst dabei einen Hebelmechanismus, der zwischen den ersten und den zweiten Aktuator und das Schließelement geschaltet ist.

Insgesamt kann ein Hebelmechanismus des Ventils also mindestens vier Arme umfassen, von denen ein erster Arm mit dem ersten Aktuator verbunden ist und ein zweiter Arm den ersten Arm mit dem Schließelement verbindet. Ferner ist ein dritter Arm mit dem zweiten Aktuator verbunden, während ein vierter Arm den dritten Arm mit dem Schließelement verbindet. Der Hebelmechanismus kann in diesem Fall als ein sogenannter "Kreuzschieber" ausgebildet sein, bei welchem zusätzlich zwei weitere Arme vorhanden sind, die an ihrem einem Ende miteinander und jeweils an einem gegenüberliegenden Ende mit dem ersten und zweiten Arm bzw. dem dritten und vierten Arm verbunden sind. Da der zweite und der vierte Arm jeweils mit dem Schließelement verbunden sind, werden die Kräfte, welche die magnetische Einrichtung auf den ersten und zweiten Aktuator ausübt, letztlich gemeinsam auf das Schließelement übertragen. Somit kann eine größere Kraft auf das Schließelement übertragen werden als dann, wenn nur ein Aktuator vorhanden ist. Dadurch wird die Zuverlässigkeit des Ventils erhöht. Ferner kann das Ventil auch bei Ausfall eines der beiden Aktuatoren mittels des jeweils anderen Aktuators und des Hebelmechanismus betätigt werden. Durch diese Redundanz wird die Ausfallsicherheit des Ventils durch das Vorhandensein zweier Aktuatoren verbessert.

Vorteilhafte Ausführungsformen der Erfindung sind in den Unteransprüchen, der Beschreibung und in der Zeichnung angegeben.

Gemäß einer Ausführungsform ist jedem Aktuator eine Elektrospule der magnetischen Einrichtung zugeordnet, mittels welcher der Aktuator aus der Ruhelage in die Aktivlage gebracht werden kann. Das Ventil wird somit mittels einer Elektrospule betätigt, welche beispielsweise mittels einer Steuereinrichtung elektrisch steuerbar ist. So kann die Steuereinrichtung z. B. einen Strom an die Elektrospule anlegen, um dadurch den Aktuator in die Aktivlage und das Schließelement des Ventils in die Offenstellung zu bringen.

Ferner kann jedem Aktuator der magnetischen Einrichtung ein Permanentmagnet zugeordnet sein. Mittels des Permanentmagneten ist der Aktuator in der Aktivlage fixierbar, um das Schließelement in der Offenstellung zu halten. Nach dem Öffnen des Ventils erfolgt somit eine Fixierung des Schließelements in der Offenstellung, wobei aufgrund des Permanentmagneten keine weitere Energie zum Halten des Schließelements benötigt wird.

Falls eine Elektrospule jedem Aktuator zugeordnet ist, kann das Zurückstellen des Aktuators in die Ruhelage durch Umpolen eines Magnetfeldes der Elektrospule erfolgen, um mittels dieser eine abstoßende magnetische Kraft auf den Aktuator auszuüben, welche die Haltekraft des Permanentmagneten überwindet. Sobald der Aktuator in die Ruhelage zurückgebracht wird, wird das Schließelement mittels der Übersetzungseinrichtung zurück in die Schließstellung verstellt.
Alternativ oder zusätzlich kann das Ventil eine Rückstelleinrichtung aufweisen, die das Schließelement in Richtung der Schließstellung vorspannt. Das Ventil kann somit besonders schnell geschlossen werden, da das Schließelement mittels der Rückstelleinrichtung in die Schließstellung gebracht wird. Eine Rückstelleinrichtung ist insbesondere dann vorteilhaft, wenn die magnetische Einrichtung keinen Permanentmagneten aufweist und der Aktuator z.B. eine einfache Eisenplatte umfasst, die mit einer Elektrospule der magnetischen Einrichtung wechselwirkt. Sobald die Elektrospule abgeschaltet wird, verringert sich die Kraft zwischen der Elektrospule und der Eisenplatte, und die Rückstelleinrichtung stellt das Schließelement zurück in die Schließstellung.

Die Übersetzungseinrichtung umfasst einen Hebelmechanismus, welcher zwischen den ersten und zweiten Aktuator und das Schließelement geschaltet ist. Mittels des Hebelmechanismus kann eine Kraft, die durch die magnetische Einrichtung erzeugt wird und den einen Aktuator entlang einer Distanz zwischen dessen Ruhelage und Aktivlage bewegt, in eine geringere Kraft umgewandelt werden, die bezogen auf die Distanz zwischen der Ruhelage und der Aktivlage des Aktuators entlang einer längeren Distanz zwischen der Schließstellung und der Offenstellung des Schließelements wirkt. Mit anderen Worten kann ein Aktuatorhub, der durch die Ruhelage und die Aktivlage des Aktuators definiert ist, in einen größeren Ventilhub umgewandelt werden, der durch die Schließstellung und Offenstellung des Schließelements definiert ist. Dabei ist der Ventilhub vorzugsweise um einen Faktor 2 bis 3 größer als der Aktuatorhub. Beispielsweise können der Aktuatorhub in einem Bereich von 1 bis 2 mm und der Ventilhub in einem Bereich von 2 bis 4 mm liegen.

Der Hebelmechanismus umfasst vorteilhafterweise einen ersten Arm, welcher mit dem Aktuator verbunden ist, und einen zweiten Arm, welcher den ersten Arm mit dem Schließelement verbindet. Durch eine geeignete Wahl der Längen des ersten und des zweiten Arms kann das Übersetzungsverhältnis der Übersetzungseinrichtung festgelegt werden. Wenn an einer Verbindung zwischen dem ersten und zweiten Arm darüber hinaus ein weiterer Arm vorgesehen ist, der mit einem feststehenden Punkt verbunden ist, beispielsweise am Gehäuse des Ventils, wird der Hebelmechanismus zu einem Kniehebel. Ein solcher Kniehebel ermöglicht eine besonders gute Kraftübertragung zwischen der magnetischen Einrichtung und dem Schließelement.

Bevorzugt liegt ein Wirkwinkel zwischen der Bewegungsrichtung des Schließelements und dem ersten Arm, der mit dem Aktuator verbunden ist, in einem Bereich zwischen 70° und 90°. Es hat sich gezeigt, dass in diesem Winkelbereich ein geringerer Aktuatorhub erforderlich ist, um einen entsprechenden größeren Ventilhub zu erzeugen. Falls das steuerbare Ventil als ein Hochvakuum-Sicherheitsventil verwendet wird, ist es somit möglich, den erforderlichen Ventilhub vorzugeben und den Wirkwinkel entsprechend anzupassen, so dass mittels des Aktuatorhubs der gewünschte Ventilhub erreicht wird.

Es hat sich wiederum gezeigt, dass eine besonders gute Kraftübertragung zwischen den zwei Aktuatoren und dem Schließelement erfolgt, wenn ein jeweiliger Wirkwinkel zwischen der Bewegungsrichtung des Schließelements und dem ersten Arm und/oder zwischen der Bewegungsrichtung des Schließelements und dem dritten Arm jeweils in einem Bereich zwischen 70° und 90° liegt. In diesem Bereich des Wirkwinkels führt ein geringerer Aktuatorhub zu einem größeren Ventilhub, der wiederum insbesondere um einen Faktor 2 bis 3 größer als der Aktuatorhub sein kann.

Bevorzugt sind die jeweiligen Wirkwinkel zwischen der Bewegungsrichtung des Schließelements und dem ersten bzw. dritten Arm gleich groß. Dadurch erfolgt eine symmetrische Kraftübertragung zwischen dem ersten Aktuator und dem Schließelement einerseits sowie zwischen dem zweiten Aktuator und dem Schließelement andererseits. Falls zusätzlich auch noch die Kräfte gleich groß sind, welche die magnetische Einrichtung auf den ersten und den zweiten Aktuator ausübt, erfolgt über den "Kniehebel" eine optimale Kraftübertragung auf das Schließelement in dessen Bewegungsrichtung zwischen der Schließstellung und der Offenstellung. Dabei sind seitliche Kräfte, welche durch das Schließelement rechtwinklig zu dessen Bewegungsrichtung ausgeübt werden, beispielsweise auf eine Führung oder Einfassung des Schließelements, aufgrund der symmetrischen Kraftübertragung minimiert. Dadurch wird der Verschleiß am Schließelement bei der Betätigung des Ventils verringert und dessen Lebensdauer verlängert.

Die Erfindung wird nachfolgend rein beispielhaft anhand möglicher Ausbildungen der Erfindung unter Bezugnahme auf die beigefügte Zeichnung erläutert. Es zeigen:
- Fig. 1: ein erfindungsgemäßes steuerbares Ventil in einem geschlossenen Zustand,
- Fig. 2: das Ventil von Fig. 1 in einem geöffneten Zustand,
- Fig. 3: ein weiteres erfindungsgemäßes Ventil in einem geschlossenen Zustand und
- Fig. 4: das Ventil von Fig. 3 in einem geöffneten Zustand.

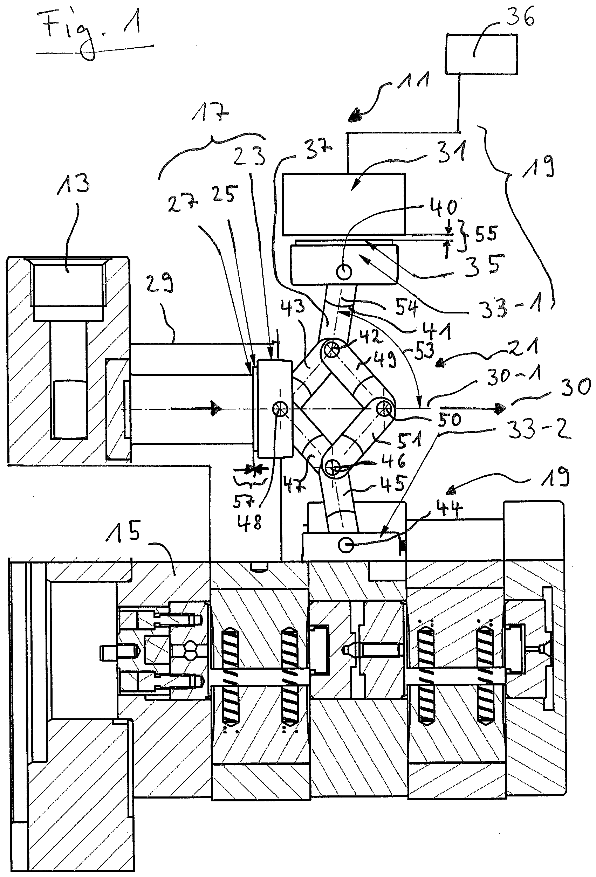

Fig. 1 zeigt ein erfindungsgemäßes Ventil 11, das innerhalb einer Vakuumanlage zwischen einem Saugflansch 13 und einem Pumpsystem 15 angeordnet ist. Der Saugflansch 13 ist mit einem nicht dargestellten Hochvakuumbereich der Vakuumanlage verbunden, in welchem sich beispielsweise ein Rezipient und wenigstens eine weitere Vakuumpumpe, wie etwa eine Turbomolekularpumpe, befinden. Bei dem dargestellten Pumpsystem 15 handelt es sich um eine zweistufige Drehschieber-Vakuumpumpe, die in einem Vorvakuumbereich der Vakuumanlage angeordnet ist und ein Vorvakuum für diese erzeugt.

Das erfindungsgemäße Ventil 11 dient als Hochvakuum-Sicherheitsventil und ist dafür vorgesehen, den Hochvakuumbereich der Vakuumanlage vom Vorvakuumbereich zu trennen. Dies kann beispielsweise bei einem Ausfall einer der Pumpen im Vorvakuum- und/oder Hochvakuumbereich erforderlich sein. Da die dargestellte Drehschieber-Vakuumpumpe eine ölgeschmierte Pumpe ist, wird durch die Trennung des Vorvakuumbereichs vom Hochvakuumbereich eine Ölströmung in den Hochvakuumbereich verhindert, die ansonsten bei Ausfall einer oder mehrerer Pumpen aufgrund des Druckunterschieds zwischen Vorvakuum- und Hochvakuumbereich auftreten könnte.

Das Ventil 11 umfasst ein Schließelement 17, das zur Trennung des Hochvakuumbereichs vom Vorvakuumbereich vorgesehen ist und das sich in Fig. 1 in einer Schließstellung befindet, eine magnetische Einrichtung 19, welche eine Kraft zum Bewegen des Schließelements 17 bereitstellt, und eine Übersetzungseinrichtung 21, über welche die magnetische Einrichtung 19 mit dem Schließelement 17 verbunden ist.

Das Schließelement 17 umfasst einen Ventilteller 23 und eine Flachdichtung 25, die an einem Ventilsitz 27 anliegt, wenn sich das Schließelement 17 in der Schließstellung befindet, wie dies in Fig. 1 dargestellt ist.

Ferner umfasst das Ventil 11 ein Ventilgehäuse 29, das den Saugflansch 13 mit dem Pumpsystem 15 verbindet. Der Ventilteller 23 ist derart innerhalb des Ventilgehäuses 29 angeordnet, dass er eine Grenze zwischen dem Vorvakuumbereich im Inneren des Ventilgehäuses 29 und einem Außenbereich auf Atmosphärendruck bildet, in welchem sich die magnetische Einrichtung 19 und die Übersetzungseinrichtung 21 befinden.

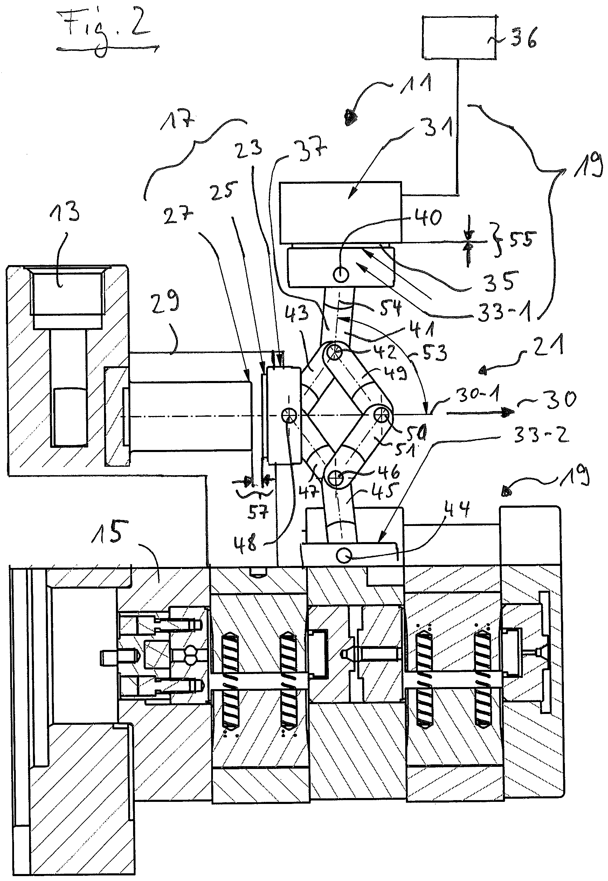

Das Schließelement 17 ist ferner mittels der Übersetzungseinrichtung 21 und der magnetischen Einrichtung 19 in einer durch den Pfeil 30 dargestellten Bewegungsrichtung aus der dargestellten Schließstellung in eine Offenstellung bewegbar, die in Fig. 2 dargestellt ist. Die Bewegungsrichtung 30 des Schließelements 17 verläuft dabei parallel zu einer Mittelachse 30-1 des Ventiltellers 23.

Die magnetische Einrichtung 19 umfasst eine erste Elektrospule 31 und eine dieser gegenüberliegend angeordnete, nicht dargestellte zweite Elektrospule. Längsmittelachsen der ersten und zweiten Elektrospule 31 verlaufen rechtwinklig zur Mittelachse 30-1 des Ventiltellers 23. Ferner umfasst die magnetische Einrichtung 19 einen ersten Aktuator 33-1 und einen gegenüberliegend angeordneten zweiten Aktuator 33-2, die jeweils mit der Übersetzungseinrichtung 21 verbunden sind. Zwischen dem ersten Aktuator 33-1 und der Elektrospule 31 ist ferner ein Permanentmagnet 35 angeordnet. Ein weiterer, nicht dargestellter Permanentmagnet befindet sich zwischen dem zweiten Aktuator 33-2 und der zweiten Elektrospule.

Der erste und zweite Aktuator 33-1, 33-2 befinden sich in Fig. 1 in einer Ruhelage, in welcher die Elektrospulen 31 stromlos, d.h. nicht eingeschaltet sind. Wenn die Elektrospulen 31 jedoch mittels einer Steuereinrichtung 36 eingeschaltet werden, so dass ein Strom durch die Elektrospulen 31 fließt und diese ein Magnetfeld erzeugen, werden der erste und zweite Aktuator 33-1, 33-2 jeweils aus der Ruhelage in eine Aktivlage bewegt, in welcher der Permanentmagnet 35 an der Elektrospule 31 anliegt. Die Aktivlage des ersten und zweiten Aktuators 33-1, 33-2 ist in Fig. 2 dargestellt. Der erste Aktuator 33-1 stellt in Aktivlage einen Magnetrückschluss für die Elektrospule 31 dar, während der zweite Aktuator 33-2 einen Magnetrückschluss für die zweite Elektrospule darstellt. Der erste und der zweite Aktuator 33-1, 33-2 sind hierfür aus einem Material hergestellt, auf welches die Elektrospulen eine Anziehungskraft ausüben können. Bevorzugt sind die Aktuatoren 33-1, 33-2 aus einem ferromagnetischen Material hergestellt, um die Kraft der Elektrospulen 31 auf die Aktuatoren 33-1, 33-2 zu verstärken.

Die Übersetzungseinrichtung 21 umfasst einen Hebelmechanismus 37, der den ersten Aktuator 33-1 und den zweiten Aktuator 33-2 mit dem Ventilteller 23 des Schließelements 17 verbindet. Der Hebelmechanismus 37 umfasst insgesamt sechs Arme, die an sechs Gelenken jeweils entweder paarweise miteinander oder mit einem der Aktuatoren 33-1, 33-2 verbunden sind. So ist ein erster Arm 41 des Hebelmechanismus 37 an einem ersten Ende mittels eines ersten Gelenks 40 mit dem ersten Aktuator 33-1 verbunden. An einem entgegengesetzten zweiten Ende ist der erste Arm 41 mittels eines zweiten Gelenks 42 sowohl mit einem zweiten Arm 43 als auch mit einem fünften Arm 49 verbunden. Auf ähnliche Weise ist ein dem ersten Arm 41 gegenüberliegend angeordneter dritter Arm 45 mittels eines dritten Gelenks 44 mit dem zweiten Aktuator 33-2 und an einem entgegengesetzten zweiten Ende mittels eines vierten Gelenks 46 sowohl mit einem vierten Arm 47 als auch mit einem sechsten Arm 51 verbunden. Mittels eines fünften Gelenks 48 sind der zweite Arm 43 und der vierte Arm 47 sowohl miteinander als auch mit dem Ventilteller 23 des Schließelements 17 verbunden. Ferner sind der fünfte und der sechste Arm 49, 51 des Hebelmechanismus 37 an einem sechsten Gelenk 50 miteinander verbunden.

Der Hebelmechanismus 37 bildet somit einen "Kreuzschieber", welcher Kräfte, die von den einander gegenüberliegend angeordneten Aktuatoren 33-1 und 33-2 auf den ersten bzw. dritten Arm ausgeübt werden, an den Ventilteller 23 des Schließelements 17 überträgt. Mit anderen Worten werden zwei entgegengesetzte Kräfte, die rechtwinklig zur Mittelachse 30-1 des Ventiltellers 23 ausgerichtet sind, mittels des Hebelmechanismus 37 in eine Kraft in Richtung der Mittelachse 30-1 des Ventiltellers 23 und somit in Bewegungsrichtung 30 des Schließelements 17 übersetzt.

Gemäß einem nicht erfindungsgemäßen Beispiel weist die magnetische Einrichtung 19 nur eine Elektrospule 31, einen ersten Aktuator 33-1 und einen Permanentmagneten 35 auf, und der Hebelmechanismus 37 umfasst lediglich den ersten, zweiten und fünften Arm 41, 43, 49. Das dem Gelenk 42 gegenüberliegende Ende des fünften Arms 49 ist bei dieser Ausführungsform an einem feststehenden Punkt angelenkt, beispielsweise an einem Gehäuse des Ventils 11. Dadurch wird der Hebelmechanismus 37 zu einem Kniehebel mit den drei Hebelarmen 41, 43 und 49.

Der Vorteil dieser Kniehebel-Ausführungsform besteht darin, dass die magnetische Einrichtung 19 und die Übersetzungseinrichtung 21 weniger Teile umfassen. Aufgrund der einseitigen Kraft, die mit nur einer Elektrospule 31 und einem Aktuator 33-1 auf das Schließelement 17 ausgeübt wird, ist das Schließelement 17 jedoch anfälliger gegenüber geringfügigen seitlichen Verschiebungen, die zu einer Undichtigkeit des Ventils 11 führen können, weshalb der Ventilteller 23 genauer geführt werden muss.

Bei der in Fig. 1 dargestellten, ersten Ausführungsform sind zwar zwei Elektrospulen 31, zwei Aktuatoren 33-1, 33-2 und sechs Arme des Hebelmechanismus 37 vorhanden, diese gestatten im Vergleich zu der Kniehebel-Ausführungsform jedoch eine genauere Ausrichtung der resultierenden Kraft auf das Schließelement 17 entlang dessen Bewegungsrichtung 30. Dies gilt insbesondere bei einem vollständig symmetrischen Aufbau, bei dem die Arme 41, 43 und 49 des Hebelmechanismus 37 mit den Armen 45, 47 und 51 baugleich sind, die beiden Aktuatoren 33-1 und 33-2 baugleich sind und die Elektrospulen 31 eine gleichgroße Kraft auf den jeweiligen Aktuator 33-1 bzw. 33-2 ausüben, d.h., Kräfte in entgegengesetzte Richtungen, aber mit gleichem Betrag. Folglich sind bei einem symmetrischen Aufbau die seitlichen Kräfte auf das Schließelement 17 minimiert, was zu einem geringeren Verschleiß des Ventils 11 beiträgt.

Zwischen der Mittelachse 30-1 des Ventiltellers 23 bzw. des Schließelements 17 und einer Längsachse 54 des ersten Arms 41 des Hebelmechanismus 37 ist ferner ein Wirkwinkel 53 des Hebelmechanismus 37 definiert. Es hat sich herausgestellt, dass ein Wirkwinkel von mindestens 70° erforderlich ist, um einen Aktuatorhub 55, der zwischen der Ruhelage und der Aktivlage des Aktuators definiert ist, mittels der Übersetzungseinrichtung 21 bzw. des Hebelmechanismus 37 in einen ausreichend großen Ventilhub 57 umzusetzen, der zwischen der Offenstellung und der Schließstellung des Schließelements 17 definiert ist. Die Größe des Aktuatorhubs 55 ist generell begrenzt, da die elektromagnetische Kraft, beispielsweise zwischen der Elektrospule 31 und dem ersten Aktuator 33-1, mit der Größe eines Luftspalts bzw. einer Distanz zwischen diesen schnell abnimmt. Andererseits ist eine Mindestgröße für den Ventilhub 57 innerhalb des Ventils 11 erforderlich, insbesondere dann, wenn das Ventil 11 als Hochvakuum-Sicherheitsventil verwendet wird, da bei einem zu geringen Ventilhub 57 zu große Strömungsverluste innerhalb des Ventils 11 auftreten bzw. der Strömungsleitwert des Ventils 11 zu gering wird.

Im Ausführungsbeispiel von Fig. 1 beträgt der Wirkwinkel im geschlossenen Zustand des Ventils 11 80°, wenn die beiden Elektrospulen 31 abgeschaltet sind, sich das Schließelement 17 in der Schließstellung befindet und sich die beiden Aktuatoren 33-1, 33-2 in der Ruhelage befinden. In Fig. 2 befindet sich das Ventil 11 hingegen im geöffneten Zustand, für welchen die Elektrospulen 31 zum Öffnen des Ventils 11 zunächst eingeschaltet und anschließend wieder abgeschaltet werden, sobald sich die beiden Aktuatoren 33-1, 33-2 in der Aktivlage befinden und der Permanentmagnet 35 an der Elektrospule 31 anliegt. In diesem geöffneten Zustand des Ventils 11 beträgt der Wirkwinkel 53 85°. Bei einem Aktuatorhub von 1,1 mm erreicht das Ventil 11 somit einen Ventilhub von 2,3 mm, wenn sich der Wirkwinkel 53 um 5° ändert.

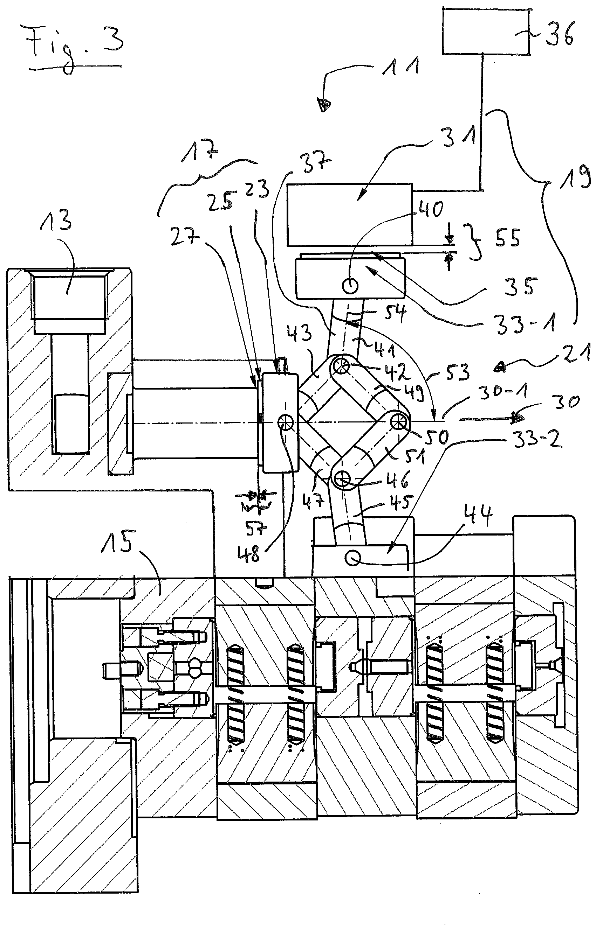

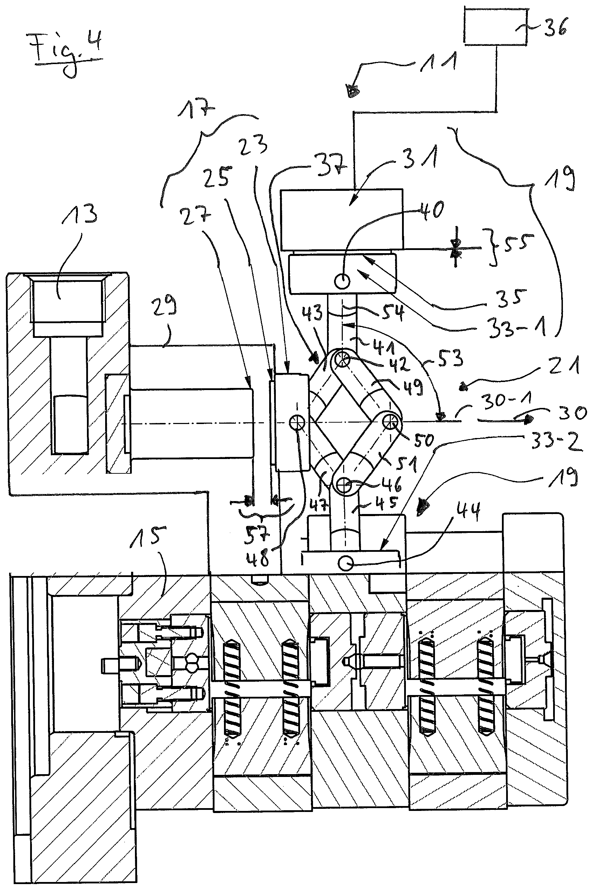

Das in Fig. 3 und 4 dargestellte Ventil 11 unterscheidet sich von dem in Fig. 1 und 2 dargestellten Ventil 11 lediglich durch die Größe des Wirkwinkels 53 zwischen der Längsachse 54 des ersten Arms 41 des Hebelmechanismus 37 und der Mittelachse 30-1 des Ventiltellers 23. Im geschlossenen Zustand (Fig. 3), in dem sich das Schließelement 17 in der Schließstellung befindet und sich die beiden Aktuatoren 33-1, 33-2 in der Ruhelage befinden, beträgt der Wirkwinkel 83°. In der Offenstellung des Schließelements 17 hingegen (vgl. Fig. 4), in der sich die beiden Aktuatoren 33-1, 33-2 in der Aktivlage befinden und die beiden Elektrospulen 31 eingeschaltet sind, beträgt der Wirkwinkel 89°. Bei diesen Wirkwinkeln erreicht das Ventil 11 bei einem Aktuatorhub von 1,5 mm einen Ventilhub von 3,6 mm.

Je nach Ausbildung des Hebelmechanismus lässt sich bei einem Aktuatorhub zwischen 1 und 2 mm also ein Ventilhub zwischen 2 und 4 mm erreichen.

Um das Ventil 11 aus dem offenen Zustand, d.h. der Offenstellung des Schließelements 17, wieder zurück in den geschlossenen Zustand bzw. die Schließstellung des Schließelements 17 zurückzubringen, wird das Magnetfeld der Elektrospulen 31 im Vergleich zum Öffnungsvorgang des Ventils 11 umgepolt. Dadurch wird eine abstoßende Kraft auf den Permanentmagnet 35 und die beiden Aktuatoren 33-1, 33-2 ausgeübt, so dass das Schließelement 17 mittels des Hebelmechanismus 37 entgegengesetzt zum dargestellten Pfeil 30 wieder in die Schließstellung verstellt wird. Dieser Schließvorgang wird durch einen Unterdruck bzw. Vorvakuumdruck unterstützt, sofern dieser im Inneren des Ventils 11 vorhanden ist. Darüber hinaus kann ein nicht dargestellter Rückstellmechanismus, wie beispielsweise eine Feder, mit dem Ventilteller 23 gekoppelt sein, um diesen mit einer zusätzlichen Kraft in Richtung der Schließstellung des Schließelements 17 zu beaufschlagen.

Der an die Elektrospulen 31 angelegte Strom wird durch die Steuereinrichtung 36 gesteuert, welche den Strom entweder auf Anweisung eines Bedieners oder in Reaktion auf ein Ereignis bereitstellt. Bei einem solchen Ereignis kann es sich beispielsweise um einen Ausfall einer Pumpe der Vakuumanlage handeln. Wenn ein solcher Ausfall anhand eines bestimmten Steuer- oder Fehlersignals erkannt wird, erhält die Steuereinrichtung 36 ein entsprechendes Signal, welches die Aktivierung der Elektrospulen des Ventils 11 auslöst, um das Schließelement 17 in die Schließstellung zu verstellen.

### Bezugszeichenliste

- 11: Ventil
- 13: Saugflansch
- 15: Pumpsystem
- 17: Schließelement
- 19: magnetische Einrichtung
- 21: Übersetzungseinrichtung
- 23: Ventilteller
- 25: Flachdichtung
- 27: Ventilsitz
- 29: Ventilgehäuse
- 30: Bewegungsrichtung des Schließelements
- 30-1: Mittelachse des Ventiltellers
- 31: Elektrospule
- 33-1: erster Aktuator
- 33-2: zweiter Aktuator
- 35: Permanentmagnet
- 36: Steuereinrichtung
- 37: Hebelmechanismus
- 40: erstes Gelenk
- 41: erster Arm
- 42: zweites Gelenk
- 43: zweiter Arm
- 44: drittes Gelenk
- 45: dritter Arm
- 46: viertes Gelenk
- 47: vierter Arm
- 48: fünftes Gelenk
- 49: fünfter Arm
- 50: sechstes Gelenk
- 51: sechster Arm
- 53: Wirkwinkel
- 54: Längsachse des ersten Arms
- 55: Aktuatorhub
- 57: Ventilhub

## Patentansprüche

1. Steuerbares Ventil (11), insbesondere Hochvakuum-Sicherheitsventil, mit
einem Schließelement (17), das in einer Bewegungsrichtung (30) zwischen einer Schließstellung und einer Offenstellung bewegbar ist,
einer magnetischen Einrichtung (19) mit wenigstens einem Aktuator (33-1, 33-2), der zwischen einer Ruhelage und einer Aktivlage bewegbar ist, und
einer Übersetzungseinrichtung (21), über welche die magnetische Einrichtung (19) derart mit dem Schließelement (17) verbunden ist, dass das Schließelement (17) die Schließstellung einnimmt, wenn sich der Aktuator (33-1, 33-2) in der Ruhelage befindet, und das Schließelement (17) die Offenstellung einnimmt, wenn sich der Aktuator (33-1, 33-2) in der Aktivlage befindet,
wobei das Schließelement (17) einen Ventilteller (23) umfasst,
**dadurch gekennzeichnet, dass**
die magnetische Einrichtung (19) einen ersten und einen zweiten Aktuator (33-1, 33-2) umfasst, die einander gegenüberliegend angeordnet und in entgegengesetzte Richtungen bewegbar sind,
die Übersetzungseinrichtung (21) einen Hebelmechanismus (37) umfasst, der zwischen den ersten und zweiten Aktuator (33-1, 33-2) und das Schließelement (17) geschaltet ist,
und zwei entgegengesetzte Kräfte, die rechtwinklig zur Mittelachse des Ventiltellers (23) ausgerichtet sind, mittels des Hebelmechanismus (37) in eine Kraft in Richtung der Mittelachse des Ventiltellers (23) und somit in Bewegungsrichtung (30) des Schließelements (17) übersetzt werden.

2. Ventil (11) nach Anspruch 1,
**dadurch gekennzeichnet, dass** jedem Aktuator (33-1, 33-2) eine Elektrospule (31) der magnetischen Einrichtung (19) zugeordnet ist, mittels welcher der Aktuator (33-1, 33-2) aus der Ruhelage in die Aktivlage bringbar ist.

3. Ventil (11) nach Anspruch 1 oder 2,
**dadurch gekennzeichnet, dass** jedem Aktuator (33-1, 33-2) ein Permanentmagnet (35) der magnetischen Einrichtung (19) zugeordnet ist, mittels welchem der Aktuator (33-1, 33-2) in der Aktivlage fixierbar ist, um das Schließelement (17) in der Offenstellung zu halten.

4. Ventil (11) nach zumindest einem der vorstehenden Ansprüche,
**gekennzeichnet durch**
eine Rückstelleinrichtung, welche das Schließelement (17) in Richtung der Schließstellung vorspannt.

5. Ventil (11) nach zumindest einem der vorstehenden Ansprüche,
**dadurch gekennzeichnet, dass**
der Hebelmechanismus (37) einen ersten Arm (41), welcher mit dem ersten Aktuator (33-1) verbunden ist, einen zweiten Arm (43), welcher den ersten Arm (41) mit dem Schließelement (17) verbindet, einen dritten Arm (45), welcher mit dem zweiten Aktuator (33-2) verbunden ist, und einen vierten Arm (47) umfasst, welcher den dritten Arm (45) mit dem Schließelement (17) verbindet.

6. Ventil (11) nach Anspruch 5,
**dadurch gekennzeichnet, dass**
ein Wirkwinkel (53) zwischen der Bewegungsrichtung des Schließelements (17) und dem ersten Arm (41) in einem Bereich zwischen 70° und 90° liegt und/oder
ein Wirkwinkel (53) zwischen der Bewegungsrichtung des Schließelements (17) und dem dritten Arm (45) in einem Bereich zwischen 70° und 90° liegt.

7. Ventil (11) nach Anspruch 5 oder 6,
**dadurch gekennzeichnet, dass**
die Wirkwinkel (53) zwischen der Bewegungsrichtung des Schließelements (17) und dem ersten Arm (41) sowie zwischen der Bewegungsrichtung des Schließelements (17) und dem dritten Arm (45) gleich groß sind.

8. Ventil (11) nach zumindest einem der vorstehenden Ansprüche,
**dadurch gekennzeichnet, dass**
ein durch die Schließstellung und Offenstellung des Schließelements (17) definierter Ventilhub (57), insbesondere um einen Faktor 2 bis 3, größer ist als ein durch die Ruhelage und Aktivlage des Aktuators (33-1, 33-2) definierter Aktuatorhub (55).

9. Ventil (11) nach Anspruch 8,
**dadurch gekennzeichnet, dass**
dass der Aktuatorhub (55) im Bereich von 1 bis 2 mm und der Ventilhub (57) im Bereich von 2 bis 4 mm liegen.

## Claims

1. A controllable valve (11), in particular a high-vacuum safety valve, comprising
a closing element (17) which is movable in a direction of movement (30) between a closed position and an open position;
a magnetic device (19) having at least one actuator (33-1, 33-2) which is movable between a position of rest and an active position; and
a translation device (21) via which the magnetic device (19) is connected to the closing element (17) such that the closing element (17) adopts the closed position when the actuator (33-1, 33-2) is in the position of rest and the closing element (17) adopts the open position when the actuator (33-1, 33-2) is in the active position,
wherein the closing element (17) comprises a valve disk (23), **characterized in that**
the magnetic device (19) comprises a first and a second actuator (33-1, 33-2) which are arranged disposed opposite one another and which are movable in opposite directions;
the translation device (21) comprises a lever mechanism (37) which is connected between the first and second actuator (33-1, 33-2) and the closing element (17); and
two opposite forces which are oriented at right angles to the central axis of the valve disk (23) are translated by means of the lever mechanism (37) into a force in the direction of the central axis of the valve disk (23) and thus in the direction of movement (30) of the closing element (17).

2. A valve (11) in accordance with claim 1,
**characterized in that**
an electric coil (31) of the magnetic device (19) is associated with each actuator (33-1, 33-2) and the actuator (33-1, 33-2) can be brought from the position of rest into the active position by means of said electric coil (31).

3. A valve (11) in accordance with claim 1 or claim 2,
**characterized in that**
a permanent magnet (35) of the magnetic device (19) is associated with each actuator (33-1, 33-2) and the actuator (33-1, 33-2) can be fixed in the active position by means of said permanent magnet (35) in order to hold the closing element (17) in the open position.

4. A valve (11) in accordance with at least one of the preceding claims,
**characterized by**
a return device which preloads the closing element (17) in the direction of the closed position.

5. A valve (11) in accordance with at least one of the preceding claims,
**characterized in that**
the lever mechanism (37) comprises a first arm (41) which is connected to the first actuator (33-1); a second arm (43) which connects the first arm (41) to the closing element (17); a third arm (45) which is connected to the second actuator (33-2); and a fourth arm (47) which connects the third arm (45) to the closing element (17).

6. A valve (11) in accordance with claim 5,
**characterized in that**
an effective angle (53) between the direction of movement of the closing element (17) and the first arm (41) is in a range between 70° and 90°; and/or
an effective angle (53) between the direction of movement of the closing element (17) and the third arm (45) is in a range between 70° and 90°.

7. A valve (11) in accordance with claim 6,
**characterized in that**
the effective angles (53) between the direction of movement of the closing element (17) and the first arm (41) and between the direction of movement of the closing element (17) and the third arm (45) are of equal magnitude.

8. A valve (11) in accordance with at least one of the preceding claims,
**characterized in that**
a valve stroke (57) which is defined by the closed position and the open position of the closing element (17) is larger, in particular by a factor of 2 to 3, than an actuator stroke (55) defined by the position of rest and the active position of the actuator (33-1, 33-2).

9. A valve (11) in accordance with claim 8,
**characterized in that**
the actuator stroke (55) is in a range from 1 to 2 mm and the valve stroke (57) is in a range from 2 to 4 mm.

## Revendications

1. Vanne pilotable (11), en particulier vanne de sécurité à vide poussé, comportant
un élément de fermeture (17) qui est mobile dans une direction de mouvement (30) entre une position fermée et une position ouverte,
un dispositif magnétique (19) pourvu d'au moins un actionneur (33-1, 33-2) qui est mobile entre une position de repos et une position active, et
un dispositif de transmission (21) par lequel le dispositif magnétique (19) est relié à l'élément de fermeture (17) de telle sorte que l'élément de fermeture (17) prend la position fermée lorsque l'actionneur (33-1, 33-2) est en position de repos, et que l'élément de fermeture (17) prend la position ouverte lorsque l'actionneur (33-1, 33-2) est en position active,
l'élément de fermeture (17) comprenant un disque de vanne (23),
**caractérisée en ce que**
le dispositif magnétique (19) comprend un premier et un second actionneur (33-1, 33-2) disposés en regard l'un de l'autre et mobiles dans des directions opposées,
le dispositif de transmission (21) comprend un mécanisme à levier (37) interposé entre les premier et second actionneurs (33-1, 33-2) et l'élément de fermeture (17),
deux forces opposées, orientées perpendiculairement à l'axe central du disque de vanne (23), sont transmises au moyen du mécanisme à levier (37) en une force dans la direction de l'axe central du disque de vanne (23) et donc dans la direction de mouvement (30) de l'élément de fermeture (17).

2. Vanne (11) selon la revendication 1,
**caractérisée en ce que**
une bobine électrique (31) du dispositif magnétique (19) est associée à chaque actionneur (33-1, 33-2), au moyen de laquelle l'actionneur (33-1, 33-2) peut être amené de la position de repos à la position active.

3. Vanne (11) selon la revendication 1 ou 2,
**caractérisée en ce que**
un aimant permanent (35) du dispositif magnétique (19) est associé à chaque actionneur (33-1, 33-2), au moyen duquel l'actionneur (33-1, 33-2) peut être fixé dans la position active afin de maintenir l'élément de fermeture (17) dans la position ouverte.

4. Vanne (11) selon l'une au moins des revendications précédentes,
**caractérisée par**
un dispositif de rappel qui précontraint l'élément de fermeture (17) en direction de la position fermée.

5. Vanne (11) selon l'une au moins des revendications précédentes,
**caractérisée en ce que**
le mécanisme à levier (37) comprend un premier bras (41) relié au premier actionneur (33-1), un second bras (43) reliant ledit premier bras (41) à l'élément de fermeture (17), un troisième bras (45) relié au second actionneur (33-2), et un quatrième bras (47) reliant le troisième bras (45) à l'élément de fermeture (17).

6. Vanne (11) selon la revendication 5,
**caractérisée en ce que**
un angle d'action (53) entre la direction de mouvement de l'élément de fermeture (17) et le premier bras (41) est dans une plage comprise entre 70° et 90°, et/ou
un angle d'action (53) entre la direction de mouvement de l'élément de fermeture (17) et le troisième bras (45) est dans une plage comprise entre 70° et 90°.

7. Vanne (11) selon la revendication 5 ou 6,
**caractérisée en ce que**
les angles d'action (53) entre la direction de mouvement de l'élément de fermeture (17) et le premier bras (41) et entre la direction de mouvement de l'élément de fermeture (17) et le troisième bras (45) sont de tailles égales.

8. Vanne (11) selon l'une au moins des revendications précédentes,
**caractérisée en ce que**
une course de vanne (57) définie par la position fermée et par la position ouverte de l'élément de fermeture (17) est supérieure, en particulier d'un facteur 2 à 3, à une course d'actionneur (55) définie par la position de repos et par la position active de l'actionneur (33-1, 33-2).

9. Vanne (11) selon la revendication 8,
**caractérisée en ce que**
la course d'actionneur (55) est dans la plage de 1 à 2 mm, et la course de vanne (57) est dans la plage de 2 à 4 mm.
